# EUROPEAN PATENT APPLICATION

(11) **EP 1 206 060 A1**
(43) Date of publication of application: **15.05.2002**
(21) Application number: 00128190.6
(22) Date of filing: 21.12.2000
(51) Int. Cl.: H04J 14/02

(54) **Multiplexer structure**

(30) Priority: 10.11.2000 US 710731
(71) Applicant: Redfern Broadband Networks Inc., Wilmington, County of Newcastle, Delaware (US); Redfern Broadband Networks Pty Ltd, Eveleigh, New South Wales 1430 (AU)
(72) Inventor: Halgren, Ross, Collaroy Plateau, New South Wales 2097 (AU)
(74) Representative: Grünecker, Kinkeldey, Stockmair & Schwanhäusser Anwaltssozietät

(57) **Abstract**

A multiplexer structure for use in a network node system, the multiplexer structure comprising an optical multiplexing means having a plurality of trunk lines, a plurality of subscriber lines, and a switching means disposed between the plurality of trunk lines and the plurality of subscriber lines, wherein the switching means is arranged, in use, to be capable of selectively connecting each of the subscriber lines to different ones of the trunk lines.

## Description

### Field of the invention

The present invention relates broadly to multiplexer and/or demultiplexer structures for use in an optical network node system.

### Background of the invention

In optical networks, there is a need to protect end-customer traffic from component failures, such as from failure in dense wavelength division multiplexed (**DWDM**) channels. The failure of a DWDM channel not only disrupts the traffic for the customer using that particular wavelength channel, but, depending on the nature of the failure, also it implies that maintenance/replacement resources must be made available locally by the telecommunication service provider. This can be an expensive exercise for high-density DWDM networks.

The present invention seeks to provide a system which is more flexible in dealing with failure of a DWDM channels.

### Summary of the invention

In accordance with a first aspect of the present invention there is provided a multiplexer structure for use in a network node system, the multiplexer structure comprising a switching means disposed between a plurality of trunk lines of an optical multiplexing means and a plurality of subscriber lines, wherein the switching means is arranged, in use, to be capable of selectively connecting each of the subscriber lines to different ones of the trunk lines.

In a preferred embodiment, the switching means is arranged, in use, to be capable of selectively connecting each of the subscriber lines to any one of the trunk lines.

In one embodiment, the multiplexer structure further comprises a plurality of trunk line interfaces disposed between the switching means and the trunk lines.

Preferably, the multiplexer structure comprises a plurality of line interfaces disposed between the switching means and the subscriber lines.

In one embodiment, the multiplexer structure is configured, in use, with more trunk lines than subscriber lines to effect M:N protection switching, where M>N.

In another embodiment, the multiplexer structure is configured, in use, with fewer trunk lines than subscriber lines to effect a bandwidth on demand structure.

The multiplexer structure may comprise two or more optical multiplexing means arranged, in use, to transmit their respective output signals along different paths to a receiver for effecting path protection.

The multiplexer structure may further comprise a backup switching means arranged, in use, to duplicate the connectivity of the switching means, and the multiplexer structure further comprises a failure control means arranged, in use, to effect a switch-over from the switching means to the backup switching means in the event of a fault with the switching means.

It will be appreciated by a person skilled in the art that through appropriate selection of the number of trunk lines, subscriber lines, and number of optical multiplexing means, multiplexer structures exhibiting various combinations of switching protection, bandwidth on demand, and path protection may be implemented in embodiments of the present invention.

In accordance with a second aspect of the present invention there is provided a demultiplexer structure for use in a network node system, the demultiplexer structure comprising a switching means disposed between a plurality of trunk lines of an optical demultiplexing means and a plurality of subscriber signal lines, wherein the switching means is arranged, in use, to be capable of selectively connecting each of the trunk lines to different ones of the subscriber lines.

In a preferred embodiment, the switching means is arranged, in use, to be capable of selectively connecting each of the trunk lines to any one of the subscriber lines.

Preferably the demultiplexer structure comprises a plurality of line interfaces disposed between the switching means and the subscriber lines.

In one embodiment, the demultiplexer structure comprises a plurality of trunk line interfaces disposed between the switching means and the trunk lines.

In one embodiment, the multiplexer structure is configured, in use, with more trunk lines than subscriber lines to effect M:N protection switching, where M>N.

In another embodiment, the multiplexer structure is configured, in use, with fewer trunk lines than subscriber lines to effect a bandwidth on demand structure.

The demultiplexer structure may comprise two or more optical demultiplexing means arranged, in use, to receive their respective input signals via different paths from a transmitter for effecting path protection.

It will be appreciated by a person skilled in the art that through appropriate selection of the number of trunk lines, subscriber lines, and number of optical demultiplexing means, demultiplexer structures exhibiting various combinations of switching protection, bandwidth on demand, and path protection may be implemented in embodiments of the present invention.

The multiplexer structure and/or the demultiplexer structure may further comprise a backup switching means arranged, in use, to duplicate the connectivity of the switching means, and the multiplexer structure further comprises a failure control means arranged, in use, to effect a switch-over from the switching means to the backup switching means in the event of a fault with the switching means.

The multiplexer structure and the demultiplexer structure may be provided in a multiplexer/demultiplexer structure having dual functionality.

In accordance with a third aspect of the present invention, there is provided a multiplexer structure for use in a mesh-network, the multiplexer structure comprising a switching means disposed between a first plurality of trunk lines of a first optical multiplexing means, and a second plurality of trunk lines of a second optical multiplexing means and a third plurality of trunk lines of a third optical multiplexing means, wherein the switching means is arranged, in use, to be capable of selectively connecting each of the trunk lines of the first plurality to different ones of the trunk lines of the second and the third pluralities of trunk lines.

Preferably, the multiplexer structure further comprises a fourth plurality of trunk lines of a fourth optical multiplexing means, and wherein the switching means is arranged, in use, to be capable of selectively connecting each of the trunk lines of the first and fourth pluralities of trunk lines to different ones of the second and third pluralities of trunk lines.

Advantageously, the switching means is arranged, in use, to be capable of connecting each of the trunk lines of the first and fourth plurality to any one of the trunk lines of the second and third plurality.

The multiplexer structure may comprise a plurality of trunk line interfaces disposed between the switching means and the trunk lines of the first, second, third and fourth pluralities of the respective optical multiplexing means.

Preferred forms of the invention will now be described, by way of example only, with reference to the accompanying drawings.

### Brief description of the drawings

Figures 1 to 5 show schematic diagrams illustrating different switching multiplexer and demultiplexer structures embodying the present invention.
Figure 6 shows a schematic diagram illustrating an optical network embodying the present invention.

### Detailed description of the embodiments

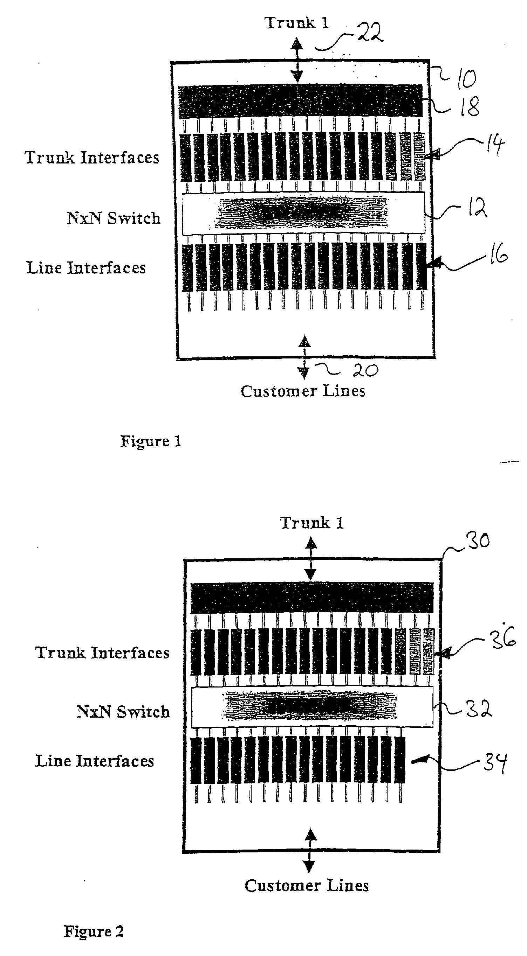

In Figure 1, the multiplexer structure 10 comprises a NxN switch 12 disposed between a plurality of trunk line interfaces 14 and subscriber line interfaces 16 respectively. The multiplexer structure 10 further comprises an optical multiplexing and demultiplexing means 18. The multiplexer structure 10 is disposed between subscriber lines, eg 20, and the DWDM output 22.

The NxN switch 12 is arranged in a manner such that it can connect each of the subscriber line interfaces 16 with any one of the trunk line interfaces 14. Accordingly, in the case of failure of one of the DWDM channel lasers, a particular subscriber's line may be switched to another trunk interface connected to a functioning DWDM laser. Thus, none of the subscriber lines is absolutely dependent upon a particular one of the DWDM lasers. The multiplexer structure 10 can continue to serve all of its subscribers, which relieves some of the pressure on the telecommunication service provider to eg store additional spare DWDM lasers on site for instant replacement.

Figure 2 illustrates the application of the present invention to effect M:N channel protection. In the embodiment shown in Figure 2, the multiplexer structure 30 again comprises an NxN switch 32. However, in the multiplexer structure 30, there are 16 subscriber line interfaces 34 to end-customers and 18 trunk line interfaces 36 to the DWDM backbone network. This corresponds to 18:16 protection switching.

To achieve this, the NxN switch 32 is a 34x34 electronic cross-connect switch in the embodiment shown in Figure 2. Alternatively, e.g. an optical cross-connect could be used to effect the switching.

The interconnects between the switch 32 and the subscriber line interfaces 34 and trunk line interfaces 36 are optical. Advantageously these interconnects support both single-mode and multi-mode propagation. These interconnects may employ multimode fibre since typically their length will be short, although HybridModeFibre™ may offer a future-proof solution for the case where the multiplexer structure 30 is to be upgraded to higher speeds.

The provision of NxN electronic cross-connect switching in the switch 32 can enable maximum switching flexibility. For example, in other embodiments similar to the multiplexer structure 30, 19:15, 20:14, 18:15, 18:14, 18:13, 18:12, etc, channel protection switching may be effected.

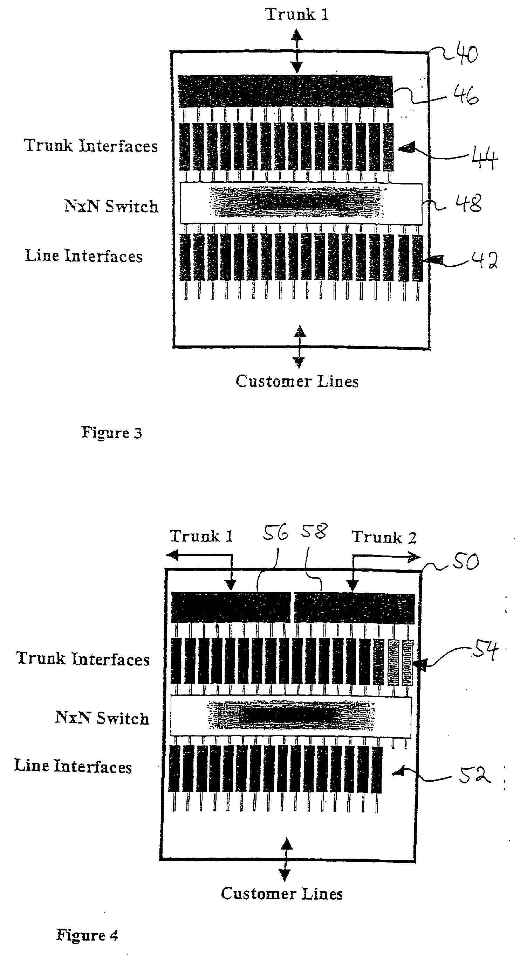

Figure 3 illustrates another embodiment of the present invention for effecting bandwidth on demand application. In the multiplexer structure 40 shown in Figure 3 there are more subscriber line interfaces 42 fitted than trunk line interfaces 44 to the channels of an optical multiplexing and demultiplexing means 46. Again, an NxN switch 48 is disposed between the trunk line interfaces 44 and subscriber line interfaces 42.

In the multiplexer structure 40, end-customers who do not require a link all the time, can be disconnected from a wavelength channel until it is needed.

The ability of the switch 48 to connect any of the subscriber line interfaces 42 to any one of the trunk line interfaces 44 means that customers can be dynamically connected/disconnected in any order and at any time.

In bandwidth on demand applications, the switch 48 represents a single point of failure. For this reason, the multiplexer structure 40 further comprises a backup switch (not shown) to connect all interfaces 42, 44. A management sub-rack (not shown) effects the duplicating of connection states on the backup switch and the establishment of connection parameters on the backup switch, which enables very rapid switch-over time in the event of a switch failure.

Turning now to Figure 4, in another embodiment both channel and path protection can be effected. In the multiplexer structure 50 shown in Figure 4, there are fewer subscriber line interfaces 52 then trunk line interfaces 54, thereby again effecting channel protection similar to the embodiment shown in Figure 2.

Furthermore, the multiplexer structure 50 comprises two optical multiplexing and demultiplexing means 56, 58, which are arranged to transmit their respective output streams along different paths to a receiver.

Accordingly, in the multiplexer structure 50 path protection can be provided by switching active subscriber line interfaces to trunk line interfaces connected to channels of the particular optical multiplexing and demultiplexing means 56 or 58 whose transmitting path is better/intact. Alternatively, dual transmitting paths may be used at all times, with a "decision" as to which signal to use being made at a switchable receiver means. This option can be utilised to effect 1+1 protection.

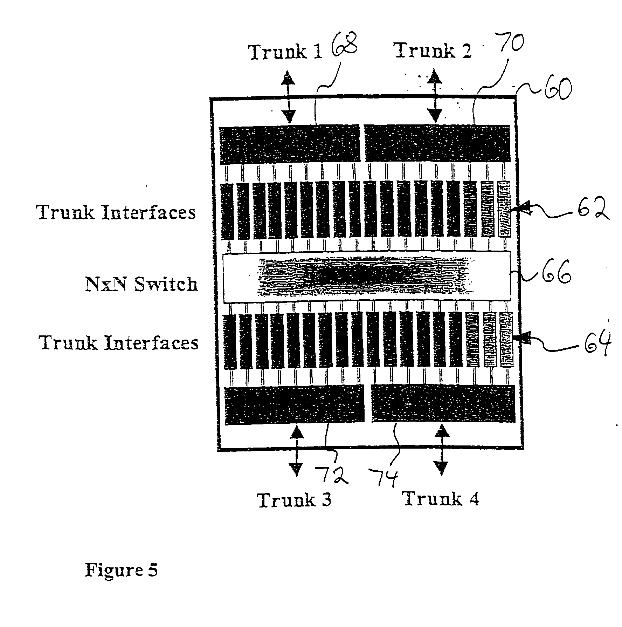

Figure 5 illustrates another embodiment of the present invention for effecting a mesh network application. In the multiplexer structure 60 shown in Figure 5, all interface cards are trunk line interfaces 62, 64, with a NxN switch 66 disposed between them. Outputs of the trunk line interfaces 52, 64 can be grouped via the DWDM multiplexers 68, 70, 72 and 74, with multiple groups of wavelength, each going via a different trunk link. The embodiment shown in Figure 4 can support mesh networking with channel cross connect and wavelength conversion between networks.

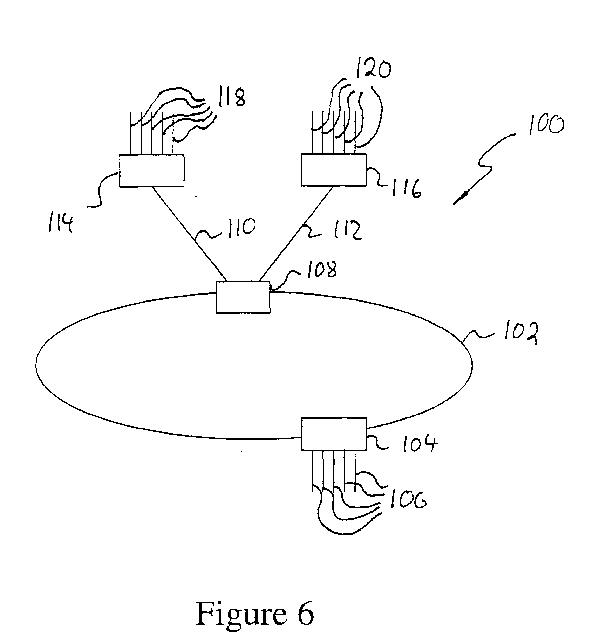

Turning now to Figure 6, there is illustrated an optical network 100 comprising a ring network 102.

Along the ring network 102 are disposed a first network element 104 which incorporates a combined multiplexer and demultiplexer structure of the type described above with reference to Figure 1 for connecting a plurality of subscriber lines 106 to the optical network 100.

The ring network 102 further comprises a further network element 108. The network element 108 is of the type described above with reference to Figure 5, and interconnects two sub-network lines 110, 112 to the ring network 102. Accordingly, the network element 108 constitutes a mesh-network element.

The sub-network lines 110 and 112 lead to further network elements 114 and 116 respectively. The network elements 114 and 116 each incorporate multiplexer/demultiplexer structures of the type described above with reference to Figure 1. The network elements 114 and 116 connect subscriber lines 118 and 120 respectively to the optical network 100.

It is noted that in the above description of the preferred embodiments, functional units which, to the person skilled in the art, are obviously required for the control and monitoring of the components of the multiplexer structures, have been omitted for greater clarity in the description of the inventive features.

It will also be appreciated by a person skilled in the art that numerous variations and/or modifications may be made to the present invention as shown in the specific embodiments without department from the spirit or scope of the invention as broadly described. The present embodiments are, therefore, to be considered in all respects to be illustrative and not restrictive.

In the claims that follow and in the summary of the invention, except where the context requires otherwise due to express language or necessary implication, the word "comprising" is used in the sense of "including", ie the features specified may be associated with further features in various embodiments of the invention.

## Claims

1. A multiplexer structure for use in a network node system, the multiplexer structure comprising:
- an optical multiplexing means having a plurality of trunk lines,
- a plurality of subscriber lines, and
- a switching means disposed between the plurality of trunk lines and the plurality of subscriber lines,
wherein the switching means is arranged, in use, to be capable of selectively connecting each of the subscriber lines to different ones of the trunk lines.

2. A multiplexer structure as claimed in claim 1, wherein the switching means is arranged, in use, to be capable of selectively connecting each of the subscriber lines to any one of the trunk lines.

3. A multiplexer structure as claimed in claims 1 or 2, wherein the multiplexer structure further comprises a plurality of trunk line interfaces disposed between the switching means and the trunk lines.

4. A multiplexer structure as claimed in any one of the preceding claims, wherein the multiplexer structure comprises a plurality of line interfaces disposed between the switching means and the subscriber lines.

5. A multiplexer structure as claimed in any one of the preceding claims, wherein the multiplexer structure is configured, in use, with more trunk lines than subscriber lines to effect M:N protection switching, where M>N.

6. A multiplexer structure as claimed in any one of claims 1 to 5, wherein the multiplexer structure is configured, in use, with fewer trunk lines than subscriber lines to effect a bandwidth on demand structure.

7. A multiplexer structure as claimed in any one of the preceding claims, wherein the multiplexer structure comprises two or more optical multiplexing means arranged, in use, to transmit their respective output signals along different paths to a receiver for effecting path protection.

8. A multiplexer structure as claimed in any one of the preceding claims, wherein the multiplexer structure further comprises a backup switching means arranged, in use, to duplicate the connectivity of the switching means, and the multiplexer structure further comprises a failure control means arranged, in use, to effect a switch-over from the switching means to the backup switching means in the event of a fault with the switching means.

9. A demultiplexer structure for use in a network node system, the demultiplexer structure comprising:
- an optical demulitplexing means having a plurality of trunk lines,
- a plurality of subscriber lines, and
- a switching means disposed between the plurality of trunk lines and the plurality of subscriber lines,
wherein the switching means is arranged, in use, to be capable of selectively connecting each of the trunk lines to different ones of the subscriber lines.

10. A demultiplexer structure as claimed in claim 9, wherein the switching means is arranged, in use, to be capable of selectively connecting each of the trunk lines to any one of the subscriber lines.

11. A demultiplexer structure as claimed in claims 9 or 10, wherein the demultiplexer structure comprises a plurality of line interfaces disposed between the switching means and the subscriber lines.

12. A demultiplexer structure as claimed in any one of claims 9 to 11, wherein the demultiplexer structure comprises a plurality of trunk line interfaces disposed between the switching means and the trunk lines.

13. A demultiplexer structure as claimed in any one of claims 9 to 12, wherein the multiplexer structure is configured, in use, with more trunk lines than subscriber lines to effect M:N protection switching, where M>N.

14. A demultiplexer structure as claimed in any one of claims 9 to 12, wherein the multiplexer structure is configured, in use, with fewer trunk lines than subscriber lines to effect a bandwidth on demand structure.

15. A demultiplexer structure as claimed in any one of claims 9 to 14, wherein the demultiplexer structure comprises two or more optical demultiplexing means arranged, in use, to receive their respective input signals via different paths from a transmitter for effecting path protection.

16. A demultiplexer structure as claimed in any one of claims 9 to 15, wherein the demultiplexer structure further comprises a backup switching means arranged, in use, to duplicate the connectivity of the switching means, and the multiplexer structure further comprises a failure control means arranged, in use, to effect a switch-over from the switching means to the backup switching means in the event of a fault with the switching means.

17. A multiplexer structure as claimed in any one of claims 1 to 8, wherein the multiplexer structure further comprises a backup switching means arranged, in use, to duplicate the connectivity of the switching means, and the multiplexer structure further comprises a failure control means arranged, in use, to effect a switch-over from the switching means to the backup switching means in the event of a fault with the switching means.

18. A multiplexer structure for use in a mesh-network, the multiplexer structure comprising:
- a first optical multiplexing means having a first plurality of trunk lines,
- a second optical multiplexing means having a second plurality of trunk lines,
- a third optical multiplexing means having a third plurality of trunk lines, and
- a switching means disposed between a first plurality of trunk lines, the second plurality of trunk lines and the third plurality of trunk lines,
wherein the switching means is arranged, in use, to be capable of selectively connecting each of the trunk lines of the first plurality to different ones of the trunk lines of the second and the third pluralities of trunk lines.

19. A multiplexer structure as claimed in claim 18, wherein the multiplexer structure further comprises a fourth plurality of trunk lines of a fourth optical multiplexing means, and wherein the switching means is arranged, in use, to be capable of selectively connecting each of the trunk lines of the first and fourth pluralities of trunk lines to different ones of the second and third pluralities of trunk lines.

20. A multiplexer structure as claimed in claim 19, wherein the switching means is arranged, in use, to be capable of connecting each of the trunk lines of the first and fourth plurality to any one of the trunk lines of the second and third plurality.

21. A multiplexer structure as claimed in claims 19 or 20, wherein the multiplexer structure comprises a plurality of trunk line interfaces disposed between the switching means and the trunk lines of the first, second, third and fourth pluralities of the respective optical multiplexing means.
